# EUROPEAN PATENT APPLICATION

(11) **EP 4 116 024 A1**
(43) Date of publication of application: **11.01.2023**
(21) Application number: 21764795.7
(22) Date of filing: 01.03.2021
(51) Int. Cl.: B23H 7/02, G05B 19/418, G06N 20/00

(54) **MACHINE LEARNING DEVICE, PREDICTION DEVICE, AND CONTROL DEVICE**

(30) Priority: 05.03.2020 JP 2020037485
(71) Applicant: FANUC CORPORATION, Oshino-mura Minamitsuru-gun Yamanashi 401-0597 (JP)
(72) Inventor: OZEKI, Shinichi, Minamitsuru-gun, Yamanashi 401-0597 (JP)
(74) Representative: Hoffmann Eitle
(86) International application number: PCT/JP2021/007732
(87) International publication number: WO 2021/177237

(57) **Abstract**

The present invention generates a learned model capable of predicting, before execution of wire-cut electrical discharge machining, the degrees of degradation of consumables after the wire-cut electrical discharge machining.

Provided is a machine learning device comprising: an input data acquisition unit which acquires input data containing a machining condition for any wire-cut electrical discharge machining applied to any workpiece by any wire-cut electrical discharge machining machine and consumables information including the degree of degradation of at least one of an electrode wire, ion exchange resin, a power supply die, and an electrode wire guide roller before wire-cut electrical discharge machining; a label acquisition unit which acquires label data indicating the degree of degradation of at least one of the electrode wire, the ion exchange resin, the power supply die, and the electrode wire guide roller after the wire-cut electrical discharge machining under the machining condition contained in the input data; and a learning unit which uses the input data acquired by the input data acquisition unit and the label data acquired by the label acquisition unit to execute supervised learning, thereby generating a learned model.

## Description

### TECHNICAL FIELD

The present invention pertains to a machine learning device, a prediction device, and a control device.

### BACKGROUND ART

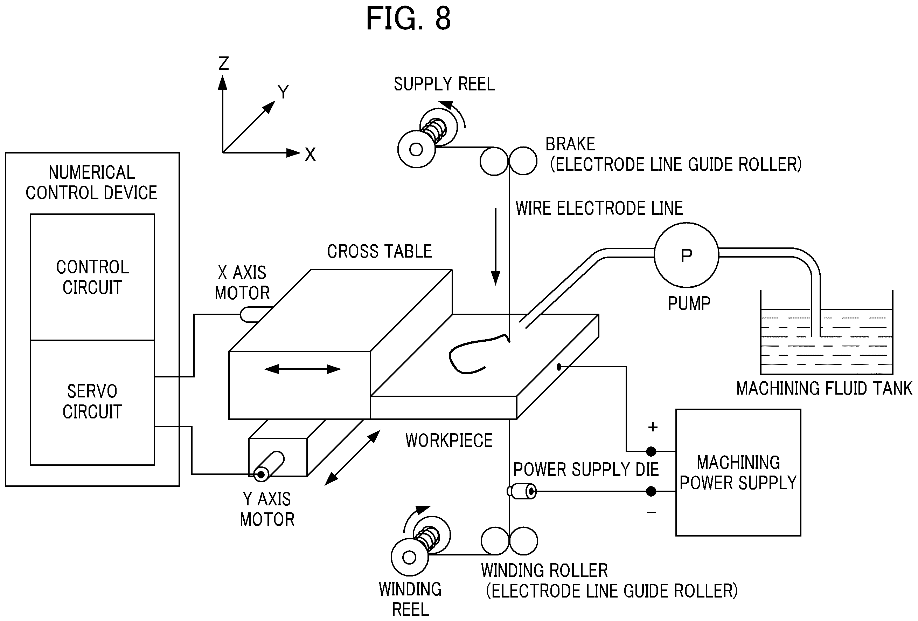

As illustrated in Fig. 8, a wire-cut electrical discharge machine passes a wire electrode line strung in a Z axis direction through a machining target workpiece and applies a pulse-shaped voltage between the workpiece and the wire electrode line to thereby cause an electric discharge between the workpiece and the wire electrode line and perform machining such as cutting or opening a hole in the workpiece. In such wire-cut electrical discharge machining, a component (hereinafter, may be referred to as a "consumable") such as an ion exchange resin, a power supply die, an electrode line guide roller, as well as the wire electrode line deteriorates in accordance with usage. Accordingly, for example, an amount of time (hereinafter, may be referred to as "life") during which usage is possible is set in advance for each consumable, and consumables for which a cumulative usage time period has reached equal to or greater than a predetermined ratio with respect to the life (for example, 80%) are sequentially exchanged.

On this point, there is a known technique that, instead of a predetermined ratio with respect to life, uses a margin which is a ratio with respect to current remaining life before machining (= life - cumulative usage time) to enable a determination of a time for exchanging a consumable while considering error in an estimate of the actual amount of machining time, and enables the consumable to be used without waste. For example, refer to Patent Document 1.

Patent Document 1: Japanese Patent No. 5595559

### DISCLOSURE OF THE INVENTION

### Problems to be Solved by the Invention

Incidentally, a degree of deterioration of a consumable changes due to a machining condition (for example, an electric discharge voltage, a type of machining fluid, a fluid pressure for the machining fluid, a machining plate thickness, etc.) for wire-cut electrical discharge machining. However, conventional simulations do not take into consider that the degree of deterioration of a consumable changes due to a machining condition. Accordingly, errors occur in estimating an amount of machining time, and it is difficult to predict an accurate remaining life. There is a problem that, in a case where it is not possible to predict accurate remaining life, machining efficiency and machining accuracy drop due to deterioration of each consumable.

In addition, change in the degree of deterioration of a consumable due to a machining condition is still determined using the experience of a worker, and there is a large load on the worker.

Accordingly, it is desirable to generate a trained model that, before wire-cut electrical discharge machining is performed, can predict a degree of deterioration for a consumable in a case where the wire-cut electrical discharge machining is performed.

### Means for Solving the Problems

(1) One aspect of a machine learning device according to the present disclosure is provided with: an input data obtaining unit configured to obtain input data that includes a machining condition for arbitrary wire-cut electrical discharge machining with respect to arbitrary workpiece by arbitrary wire-cut electrical discharge machine and consumables information including a degree of deterioration before wire-cut electrical discharge machining in accordance with the machining condition for at least one selected from an electrode line, an ion exchange resin, a power supply die, and an electrode line guide roller; a label obtaining unit configured to obtain label data indicating a degree of deterioration after wire-cut electrical discharge machining in accordance with the machining condition included in the input data for the at least one selected from the electrode line, the ion exchange resin, the power supply die, and the electrode line guide roller; and a learning unit configured to use the input data obtained by the input data obtaining unit and the label data obtained by the label obtaining unit to execute supervised learning and generate a trained model.
(2) One aspect of prediction device according to the present disclosure is provided with: a trained model generated by the machine learning device according to (1); an input unit configured to input, before wire-cut electrical discharge machining to be performed by a wire-cut electrical discharge machine, a machining condition for the wire-cut electrical discharge machining and the consumables information including a degree of deterioration before the wire-cut electrical discharge machining for at least one selected from an electrode line, an ion exchange resin, a power supply die, and an electrode line guide roller; and a prediction unit configured to predict a degree of deterioration after wire-cut electrical discharge machining in accordance with the machining condition and the consumables information inputted by the input unit using the trained model for the at least one selected from the electrode line, the ion exchange resin, the power supply die, and the electrode line guide roller.
(3) One aspect of a control device according to the present disclosure is provided with a prediction device according to (2).

### Effects of the Invention

By virtue of one aspect, it is possible to generate a trained model that, before wire-cut electrical discharge machining is performed, can predict a degree of deterioration for a consumable in a case where the wire-cut electrical discharge machining is performed.

### BRIEF DESCRIPTION OF THE DRAWINGS

Fig. 1 is a functional block diagram illustrating an example of a functional configuration of a numerical control system according to one embodiment;
Fig. 2 is a view that illustrates an example of a trained model provided to the prediction device in Fig. 1;
Fig. 3 is a view that illustrates an example of a degree of deterioration of a wire electrode line;
Fig. 4 is a view that illustrates an example of consumables management tables;
Fig. 5 is a flow chart for describing prediction processing by the prediction device in an operation phase;
Fig. 6 is a view that illustrates an example of a configuration of a numerical control system;
Fig. 7 is a view that illustrates an example of a configuration of a numerical control system; and
Fig. 8 is a view of an example of a schematic for a wire-cut electrical discharge machine.

### PREFERRED MODE FOR CARRYING OUT THE INVENTION

Description is given below regarding one embodiment according to the present disclosure, with reference to the drawings. Exemplification is given here regarding a case where an electrode line can be reused as a wire electrode line and is not disposed after use. Note that the present invention is not limited to a reusable wire electrode line, and can also be applied to a case of wire-cut electrical discharge machining using a disposable wire electrode line.

### <One embodiment>

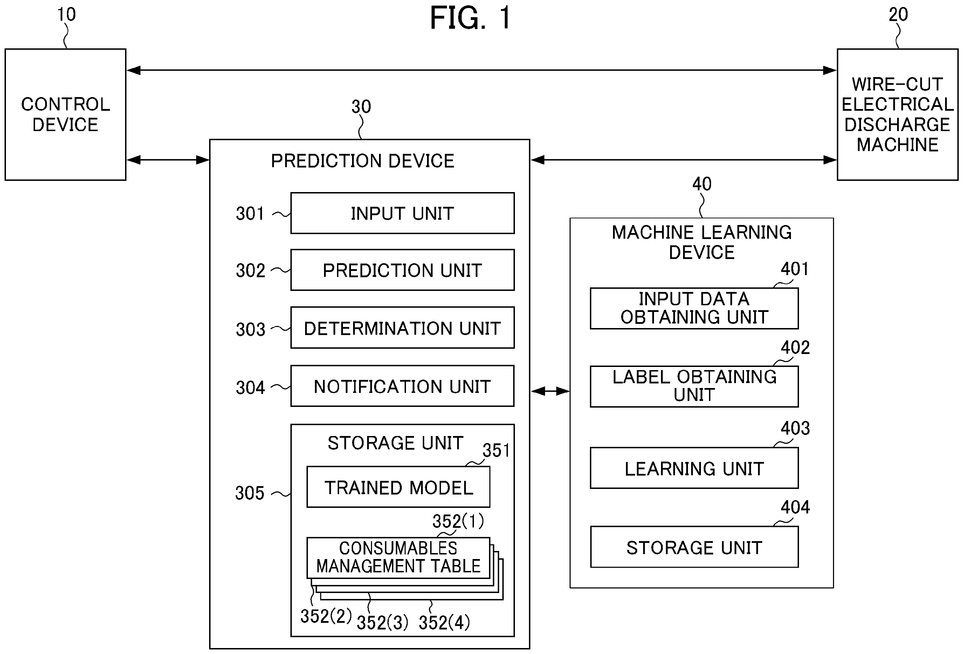

Fig. 1 is a functional block diagram illustrating an example of a functional configuration of a numerical control system according to one embodiment. As illustrated in Fig. 1, the numerical control system has a control device 10, a wire-cut electrical discharge machine 20, a prediction device 30, and a machine learning device 40.

The control device 10, the wire-cut electrical discharge machine 20, the prediction device 30, and the machine learning device 40 may be directly connected to each other via a connection interface (not shown). The control device 10, the wire-cut electrical discharge machine 20, the prediction device 30, and the machine learning device 40 may also be mutually connected via a network (not shown) such as a local area network (LAN) or the internet. In this case, the control device 10, the wire-cut electrical discharge machine 20, the prediction device 30, and the machine learning device 40 are each provided with a communication unit (not shown) for mutually communicating via the corresponding connection. Note that, as described below, the control device 10 may include the prediction device 30 and the machine learning device 40. In addition, the wire-cut electrical discharge machine 20 may include the control device 10.

The control device 10 is a numerical control device which is publicly known to a person skilled in the art. The control device 10 generates an operation command based on control information, and transmits the generated operation command to the wire-cut electrical discharge machine 20. As a result, the control device 10 controls operation by the wire-cut electrical discharge machine 20. The control device 10 also outputs this control information to the prediction device 30.

Note that control information, for example, may include a machining condition for wire-cut electrical discharge machining. The machining condition is inputted by a worker via an input device (not shown) such as a touch panel included in the control device 10. A machining condition for wire-cut electrical discharge machining, for example, may include at least one selected from an electrical discharge output, an amount of machining time, a type of machining fluid, a fluid pressure for the machining fluid, a wire feeding speed, and a workpiece plate thickness in wire-cut electrical discharge machining that is to be performed.

In addition, the control device 10 may, for example, accept, via the input device (not shown) in the control device 10, a selection by a worker of consumables such as a wire electrode line, an ion exchange resin, a power supply die, and an electrode line guide roller, and output information pertaining to the selected consumable to the prediction device 30, which is described below. In this case, the control device 10 may store a list of identification information (hereinafter, also referred to as a "consumable ID") pertaining to wire electrode lines, ion exchange resins, power supply dies, and electrode line guide rollers that can be selected for the wire-cut electrical discharge machine 20, the list being stored as a consumables data table in a hard disk drive (HDD), etc. The control device 10 may output, to the prediction device 30, the consumable IDs for a wire electrode line, an ion exchange resin, a power supply die, and an electrode line guide roller selected by the worker.

As illustrated in Fig. 8, the wire-cut electrical discharge machine 20 is a wire-cut electrical discharge machine that is publicly known to a person skilled in the art, and, based on an operation command from the control device 10, performs wire-cut electrical discharge machining of a workpiece to be machined. The wire-cut electrical discharge machine 20 feeds back, to the control device 10, information indicating an operating state based on the operation command from the control device 10.

In an operation phase, before wire-cut electrical discharge machining by the wire-cut electrical discharge machine 20, the prediction device 30 may obtain the machining condition, which is for wire-cut electrical discharge machining and is included in the control information from the control device 10. In addition, the prediction device 30 may, for example, be input with consumable IDs for at least a wire electrode line, an ion exchange resin, a power supply die, and an electrode line guide roller from the control device 10, and, based on consumables management tables 352(1) to 352(4) which are described below, obtain consumables information that includes a degree of deterioration at the current time (in other words, before wire-cut electrical discharge machining) for each consumable. The prediction device 30 can input the obtain machining condition and consumables information to a trained model provided from the later-described machine learning device 40 to thereby predict a degree of deterioration after the wire-cut electrical discharge machining for the selected wire electrode line, ion exchange resin, power supply die, electrode line guide roller, etc.

Note that the consumables information may include, for example, the material and thickness of the wire electrode line, the material of the ion exchange resin, the material of the power supply die, and the material of the electrode line guide roller, in addition to the degrees of deterioration at the current time for the wire electrode line, the ion exchange resin, the power supply die, and the electrode line guide roller.

The material of the wire electrode line is molybdenum, tungsten, or brass, for example. The thickness of the wire electrode line is a diameter in the range of 0.1 mm to 0.3 mm, for example.

The material of the ion exchange resin is something for which a mixing ratio for a cationic resin and an anionic resin is "1:1", "1.3:1", "1:1.5", etc. Note that a resin that is not a cationic resin or an anionic resin may be mixed in with the ion exchange resin.

The material of the power supply die is cemented carbide, cermet, or a silver tungsten alloy, for example.

The electrode line guide roller is urethane or steel, for example.

Before describing the prediction device 30, description is given regarding degrees of deterioration of a wire electrode line, an ion exchange resin, a power supply die, and an electrode line guide roller, and given regarding machine learning for generating a trained model.

### <Regarding degrees of deterioration of wire electrode line, ion exchange resin, power supply die, and electrode line guide roller>

A "degree of deterioration of wire electrode line" indicates the degree of fouling or deformation of a wire electrode line used in wire-cut electrical discharge machining by the wire-cut electrical discharge machine 20. For example, a brand-new wire electrode line is in the best state with the cross-section thereof having a circular shape, and thus the "degree of deterioration of wire electrode line" thereof is "0%". In accordance with the wire electrode line being repeatedly used, the "degree of deterioration of wire electrode line" increases due to, for example, sputter adhering to the wire electrode line or the wire electrode line deforming due to heat at a time of electric discharge. For example, the "degree of deterioration of wire electrode line" becomes "100%" when it is necessary to exchange the wire electrode line.

A "degree of deterioration of ion exchange resin" indicates a degree of fouling in an ion exchange resin used in wire-cut electrical discharge machining by the wire-cut electrical discharge machine 20. For example, a brand-new ion exchange resin is in the best state and thus the "degree of deterioration of ion exchange resin" thereof is "0%". The "degree of deterioration of ion exchange resin" increases due to impurities such as sputter being included in machining fluid in accordance with wire-cut electrical discharge machining being repeatedly performed. For example, the "degree of deterioration of ion exchange resin" becomes "100%" when it is necessary to exchange the ion exchange resin.

A "degree of deterioration of power supply die" indicates the degree of fouling or deformation of a power supply die used in wire-cut electrical discharge machining by the wire-cut electrical discharge machine 20. For example, a brand-new power supply die is in the best state and thus the "degree of deterioration of power supply die" thereof is "0%". In accordance with wire-cut electrical discharge machining being repeatedly performed, the "degree of deterioration of power supply die" increases due to, for example, deformation accompanying contact with a wire electrode line or sputter adhering to the power supply die. For example, the "degree of deterioration of power supply die" becomes "100%" when it is necessary to exchange the power supply die.

A "degree of deterioration of electrode line guide roller" indicates the degree of fouling or deformation of an electrode line guide roller used in wire-cut electrical discharge machining by the wire-cut electrical discharge machine 20. For example, a brand-new electrode line guide roller is in the best state, and thus the "degree of deterioration of electrode line guide roller" thereof is "0%". In accordance with wire-cut electrical discharge machining being repeatedly performed, the "degree of deterioration of electrode line guide roller" increases due to, for example, deformation accompanying friction between the electrode line guide roller and a wire electrode line or sputter adhering to the electrode line guide roller. For example, the "degree of deterioration of electrode line guide roller" becomes "100%" when it is necessary to exchange the electrode line guide roller.

Note that the wire electrode line, ion exchange resin, power supply die, and electrode line guide roller degrees of deterioration are given as percentage values in a range of "0%" to "100%", but may be, for example, values in a range from "0" to "1".

### <Machine learning device 40>

The machine learning device 40, for example, obtains in advance input data that includes a machining condition for arbitrary wire-cut electrical discharge machining with respect to arbitrary workpiece by arbitrary wire-cut electrical discharge machine, and consumables information that includes degrees of deterioration before machining for a wire electrode line, an ion exchange resin, a power supply die, and an electrode line guide roller which were used in the arbitrarily-defined wire-cut electrical discharge machining.

The machine learning device 40 also obtains, as a label (correct answer), data indicating the degrees of deterioration for the wire electrode line, ion exchange resin, power supply die, and electrode line guide roller after the wire-cut electrical discharge machining in accordance with the machining condition in the obtained input data.

The machine learning device 40 constructs a trained model, which is described below, by performing supervised learning using training data which is a group of obtained input data and labels.

As a result, the machine learning device 40 can provide the constructed trained model to the prediction device 30.

The machine learning device 40 will be described in detail.

As illustrated in Fig. 1, the machine learning device 40 has an input data obtaining unit 401, a label obtaining unit 402, a learning unit 403, and a storage unit 404.

In a learning phase, the input data obtaining unit 401 obtains, as input data, a machining condition for arbitrary wire-cut electrical discharge machining with respect to arbitrary workpiece by arbitrary wire-cut electrical discharge machine and consumables information that includes degrees of deterioration for a wire electrode line, etc. before the wire-cut electrical discharge machining in accordance with the machining condition. This input data is obtained from the control device 10, etc. via the communication unit (not shown).

Note that, as described above, the machining condition includes an electrical discharge output, an amount of machining time, a type of machining fluid, a fluid pressure for the machining fluid, a wire feeding speed, a workpiece plate thickness, etc. The consumables information includes, for example, the material of the wire electrode line, the thickness of the wire electrode line, the material of the ion exchange resin, the material of the power supply die, and the material of the electrode line guide roller, in addition to degrees of deterioration for the wire electrode line, the ion exchange resin, the power supply die, and the electrode line guide roller before wire-cut electrical discharge machining.

The input data obtaining unit 401 outputs obtained input data to the storage unit 404.

The label obtaining unit 402 obtains, as label data (correct answer data), data indicating the degrees of deterioration for the wire electrode line, ion exchange resin, power supply die, and electrode line guide roller after the wire-cut electrical discharge machining in accordance with the machining condition included the input data. The label obtaining unit 402 outputs obtained label data to the storage unit 404.

Note that a label is a value in the range of "0%" to "100%" as described above.

The learning unit 403 accepts a group of the above-described input data and a label as training data and uses the accepted training data to perform supervised learning, to thereby construct a trained model 351 that, based on a machining condition for wire-cut electrical discharge machining to be performed on a machining target workpiece and consumables information including degrees of deterioration at the current time for the selected wire electrode line, etc., predicts degrees of deterioration for the wire electrode line, etc. after the wire-cut electrical discharge machining.

The learning unit 403 provides the constructed trained model 351 to the prediction device 30.

It is desirable to prepare a large number of items of training data in order to perform the supervised learning. For example, it may be that training data, for which the degrees of deterioration for the wire electrode line, ion exchange resin, power supply die, and electrode line guide roller before and after wire-cut electrical discharge machining has been evaluated by an expert, is created for each combination of every possible machining condition for wire-cut electrical discharge machining and every possible wire electrode line, ion exchange resin, power supply die, and electrode line guide roller. Alternatively, it may be that training data is obtained from each control device 10 at various locations where the control devices 10 are actually operated, such as factories belonging to customers.

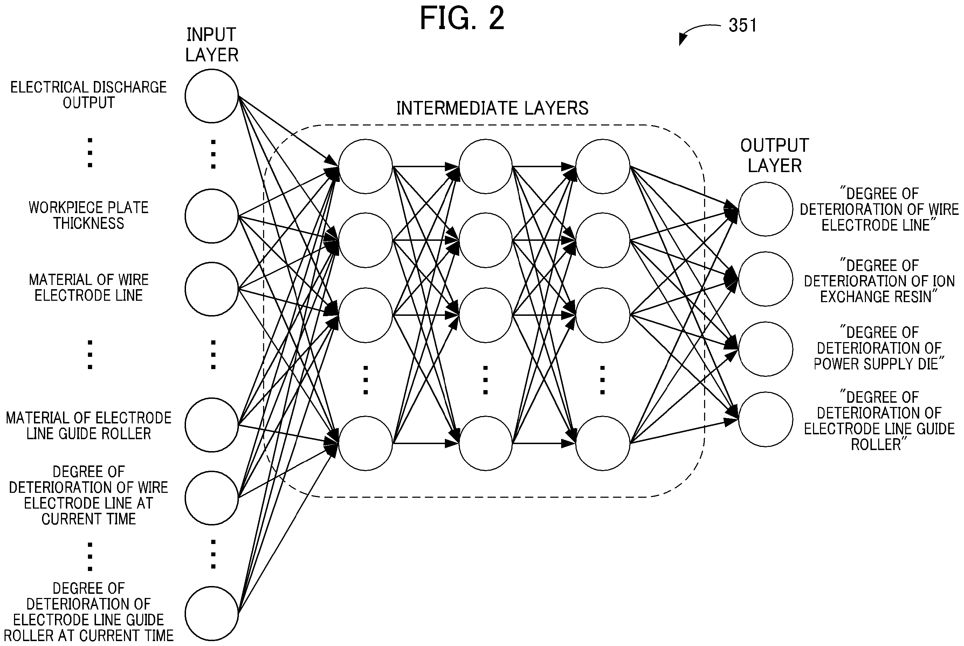

Fig. 2 is a view that illustrates an example of a trained model 351 provided to the prediction device 30 in Fig. 1. As illustrated in Fig. 2, the trained model 351 exemplifies a multi-layer neural network that sets a machining condition for wire-cut electrical discharge machining to be performed and consumables information including degrees of deterioration at the current time for a selected wire electrode line, ion exchange resin, power supply die, and electrode line guide roller as an input layer, and sets data indicating the degrees of deterioration for the wire electrode line, ion exchange resin, power supply die, and electrode line guide roller after the wire-cut electrical discharge machining in accordance with this machining condition as an output layer.

Note that, the machining condition for the wire-cut electrical discharge machining to be performed includes an electrical discharge output, an amount of machining time, a type of machining fluid, a fluid pressure for the machining fluid, a wire feeding speed, a workpiece plate thickness, etc. The consumables information includes, for example, the material of the wire electrode line, the thickness of the wire electrode line, the material of the ion exchange resin, the material of the power supply die, and the material of the electrode line guide roller, in addition to degrees of deterioration at the current time for the wire electrode line, the ion exchange resin, the power supply die, and the electrode line guide roller.

In addition, in a case of newly obtaining teaching data after constructing the trained model 351, the learning unit 403 may further perform supervised learning with respect to the trained model 351 to thereby update the constructed trained model 351.

The machine learning device 40 may also perform supervised learning by sharing the trained model 351 with another machine learning device 40. As a result, it becomes possible to perform supervised learning by distributing the trained model 351 to each of a plurality of machine learning devices 40, and it becomes possible to improve the efficiency of the supervised learning.

The supervised learning described above may be performed by online learning, may be performed by batch learning, or may be performed by mini-batch learning.

Online learning is a learning method in which wire-cut electrical discharge machining is performed by the wire-cut electrical discharge machine 20, and supervised learning is immediately performed each time training data is created. In addition, batch learning is a learning method in which wire-cut electrical discharge machining is repeatedly performed at the wire-cut electrical discharge machine 20 and training data is repeatedly created, a plurality of items of training data that correspond to the repetitions are collected, and all of the collected training data is used to perform supervised learning. Furthermore, mini-batch learning is a learning method where supervised learning is performed each time a certain amount of training data is accumulated, with the certain amount being between that for online learning and that for batch learning.

The storage unit 404 is, for example, a random-access memory (RAM), and stores, for example, input data obtained by the input data obtaining unit 401, label data obtained by the label obtaining unit 402, the trained model 351 constructed by the learning unit 403, etc.

This concludes description of machine learning for generating the trained model 351 that the prediction device 30 is provided with.

Next, description is given regarding the prediction device 30 in an operation phase. In the following description, exemplification is given for a case of using the trained model 351 depicted in Fig. 2 as a trained model, in other words using a multi-layer neural network that sets a machining condition for wire-cut electrical discharge machining to be performed and consumables information including degrees of deterioration for a selected wire electrode line, etc. as an input layer, and sets "degree of deterioration of wire electrode line", etc. as an output layer.

### <Prediction device 30 in operation phase>

As illustrated in Fig. 1, the prediction device 30 in the operation phase is configured by including an input unit 301, a prediction unit 302, a determination unit 303, a notification unit 304, and a storage unit 305.

Note that the prediction device 30 is provided with an arithmetic processing device (not shown) such as a central processing unit (CPU) for realizing operation of the functional blocks in Fig. 1. In addition, the prediction device 30 is provided with an auxiliary storage device (not shown) such as a read-only memory (ROM) or an HDD that stores various control programs, and a main storage device (not shown) such as a RAM that stores data temporarily required for the arithmetic processing device to execute a program.

In the prediction device 30, the arithmetic processing device reads an OS or application software from the auxiliary storage apparatus, and while deploying the read OS or application software to the main storage device, performs arithmetic processing based on the OS or application software. Based on a result of the arithmetic processing, the prediction device 30 controls each item of hardware. As a result, processing according to the functional blocks in Fig. 1 is realized. In other words, the prediction device 30 can realize this processing by collaboration between hardware and software.

Before wire-cut electrical discharge machining by the wire-cut electrical discharge machine 20, for example, the input unit 301 inputs a machining condition to be carried out in accordance with the wire-cut electrical discharge machining from control information from the control device 10, and consumable IDs indicating a wire electrode line, an ion exchange resin, a power supply die, and an electrode line guide roller selected by a worker. Based on the consumables management tables 352 stored in the later-described storage unit 305 and the inputted consumable IDs, the input unit 301 obtains consumables information that includes the degrees of deterioration at the current time for the wire electrode line, the ion exchange resin, the power supply die, and the electrode line guide roller.

The input unit 301 outputs to the prediction unit 302 the obtained machining condition to be carried out and the consumables information that includes the degrees of deterioration at the current time for the wire electrode line, etc. selected by the worker.

The prediction unit 302 inputs, to the trained model 351 in Fig. 2, the obtained machining condition to be carried out and the consumables information that includes the degrees of deterioration at the current time for the wire electrode line, etc. selected by the worker. Based on "degree of deterioration of wire electrode line", "degree of deterioration of ion exchange resin", "degree of deterioration of power supply die", and "degree of deterioration of electrode line guide roller" which are outputs from the trained model 351, the prediction unit 302 predicts the degrees of deterioration after the wire-cut electrical discharge machining for the selected wire electrode line, ion exchange resin, power supply die, and electrode line guide roller.

As a result, before wire-cut electrical discharge machining is performed, the prediction device 30 can predict whether the state of each of the wire electrode line, the ion exchange resin, the power supply die, and the electrode line guide roller will be good or bad in the case where the wire-cut electrical discharge machining is performed.

The determination unit 303 determines whether or not the selected wire electrode line, ion exchange resin, power supply die, and electrode line guide roller will be appropriate, based on the degrees of deterioration after the wire-cut electrical discharge machining for the wire electrode line, the ion exchange resin, the power supply die, and the electrode line guide roller, these degrees of deterioration being predicted by the prediction unit 302.

More specifically, for each of the wire electrode line, the ion exchange resin, the power supply die, and the electrode line guide roller, the determination unit 303 determines whether each will be appropriate, based on a comparison between a degree of deterioration prediction value and a preset threshold. In the case where a consumable will not be appropriate, the determination unit 303 determines to output an alarm. As a result, in a case where wire-cut electrical discharge machining is performed under the inputted machining condition, it is possible to notify a worker that exchange of a consumable, which is a wire electrode line for example, during machining will occur.

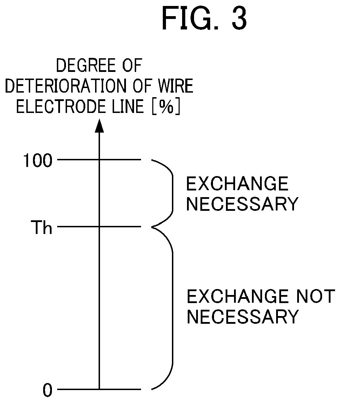

Fig. 3 is a view that illustrates an example of a degree of deterioration of a wire electrode line. As illustrated in Fig. 3, for example, even if the degree of deterioration before machining for a wire electrode line is equal to or less than a threshold Th (for example, 80%, etc.), the degree of deterioration changes due to sputter adhering to the wire electrode line or erosion (deformation) of the wire electrode line due to heat at a time of electric discharge, in accordance with wire-cut electrical discharge machining. For example, in a case where the degree of deterioration of a wire electrode line is an appropriate value that is equal to or less than the preset threshold Th, the wire electrode line functions appropriately. In contrast, in a case where the degree of deterioration of a wire electrode line exceeds the preset threshold Th, the wire electrode line does not function appropriately. In this case, a worker needs to exchange the wire electrode line with a new wire electrode line or adjust a machining condition (for example, an amount of machining time, a wire feeding speed, etc.). Accordingly, the determination unit 303 determines to output an alarm with an instruction to exchange the wire electrode line or an instruction to adjust a machining condition, and outputs a determination result to the notification unit 304, which is described below.

Note that, in cases for an ion exchange resin, a power supply die, and an electrode line guide roller, the determination unit 303 performs processing similar to the case for a wire electrode line. However, the preset threshold Th may be set for each of a wire electrode line, an ion exchange resin, a power supply die, and an electrode line guide roller.

As a result, for each consumable selected by a worker, the consumable being a wire electrode line for example, the numerical control system can, before wire-cut electrical discharge machining by the wire-cut electrical discharge machine 20, predict a degree of deterioration after machining is performed under a machining condition for wire-cut electrical discharge machining to be performed to thereby be able to easily detect an optimal time at which to exchange a consumable or the necessity of adjusting the machining condition. In other words, the numerical control system can detect in advance whether it will be necessary to, during the wire-cut electrical discharge machining, exchange a wire electrode line, an ion exchange resin, a power supply die, or an electrode line guide roller, or adjust the machining condition.

For example, a worker may adjust an amount of machining time with respect to a machining target workpiece, adjust a wire feeding speed, etc., such that the degree of deterioration after wire-cut electrical discharge machining for a consumable, which is a wire electrode line for example, does not exceed the threshold Th. As a result, before wire-cut electrical discharge machining is started, the numerical control system enables adjustment to a machining condition at which it is possible to perform the wire-cut electrical discharge machining without exchanging a consumable during the machining, the consumable being a wire electrode line for example. At a convenient stage for wire-cut electrical discharge machining, the numerical control system may, for example, stop the wire-cut electrical discharge machine 20 so that a consumable, which is a wire electrode line for example, is exchanged.

The notification unit 304 may, for example, output a determination result by the determination unit 303 on whether a selected consumable is appropriate to an output device (not shown) such as a liquid crystal display included in the control device 10 and/or the wire-cut electrical discharge machine 20, the selected consumable being a wire electrode line for example. For example, in a case where a selected wire electrode line is appropriate, the control device 10 may cause the wire-cut electrical discharge machine 20 to execute wire-cut electrical discharge machining under an inputted machining condition. In contrast, in a case where a selected wire electrode line is not appropriate, the notification unit 304 may output an alarm to the output device (not shown) in the control device 10 and/or the wire-cut electrical discharge machine 20. Note that the notification unit 304 may make a notification using audio via a speaker (not shown).

It may be that the storage unit 305 is a ROM, an HDD, etc., and stores various control programs as well as the trained model 351 and the consumables management tables 352.

### <Consumables management tables 352>

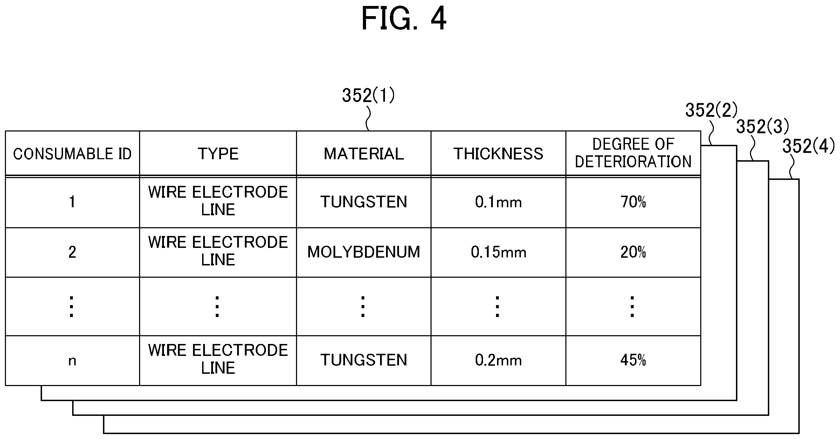

Fig. 4 is a view that illustrates an example of consumables management tables 352(1) to 352(4). In Fig. 4, the consumables management tables 352(1) to 352(4) are respectively a wire electrode line consumables management table, an ion exchange resin consumables management table, a power supply die consumables management table, and an electrode line guide roller consumables management table.

As illustrated in Fig. 4, the consumables management table 352(1) includes a "consumable ID" for identifying all wire electrode lines which are managed to be usable in wire-cut electrical discharge machining. The consumables management table 352(1) also includes a "type", "material", "thickness" and "degree of deterioration" for the wire electrode line corresponding to the consumable ID.

Note that, similarly to the case for the consumables management table 352(1), the consumables management tables 352(2) to 352(4) include a "consumable ID" for identifying all ion exchange resin, power supply dies, and electrode line guide rollers that are managed to be usable in wire-cut electrical discharge machining. Similarly to the case for the consumables management table 352(1) excluding "thickness", the consumables management tables 352(2) to 352(4) also include a "type", "material", and "degree of deterioration" for ion exchange resins, power supply dies, and electrode line guide rollers corresponding to the consumable IDs.

The "consumable ID" in the consumables management table 352(1) is information for identifying a wire electrode line selected by a worker at the control device 10, and is preset by the worker. In Fig. 4, 1 through n are assigned to respective wire electrode lines as consumable IDs. Note that, a number from 1 to n is set as the "consumable ID", but alphabetical letters, a combination of numbers and alphabetic letters, etc. may be set (n is an integer equal to or greater than 2).

In addition, the "consumable ID" may include type information in addition to identification information. For example, type information may be included by assigning "1" to "99" as the "consumable ID" for wire electrode lines, assigning "100" to "199" as the "consumable ID" for ion exchange resins, assigning "200" to "299" as the "consumable ID" for power supply dies, and assigning "300" to "399" as the "consumable ID" for electrode line guide rollers.

For "type" in the consumables management table 352(1), "wire electrode line" is stored for each wire electrode line to which the above-described consumable ID is assigned.

For "material" in the consumables management table 352(1), the material of the wire electrode line, such as tungsten, is stored for each wire electrode line to which the above-described consumable ID is assigned.

For "thickness" in the consumables management table 352(1), the thickness of the wire electrode line is stored for each wire electrode line to which the above-described consumable ID is assigned.

For "degree of deterioration" in the consumables management table 352(1), the degree of deterioration for the wire electrode line at the current time determined by a worker after previous wire-cut electrical discharge machining is stored for each wire electrode line to which the above-described consumable ID is assigned. In other words, the "degree of deterioration" in the consumables management table 352(1) is inputted and updated by a worker after the degree of deterioration of a wire electrode line is determined by the worker each time the wire electrode line is used in wire-cut electrical discharge machining.

In a case below where it is not necessary to individually distinguish each of the consumables management tables 352(1) to 352(4), the consumables management tables 352(1) to 352(4) may be collectively referred to as the "consumables management tables 352".

### <Prediction processing by prediction device 30 in operation phase>

Next, description is given regarding operation for prediction processing by the prediction device 30 according to the present embodiment.

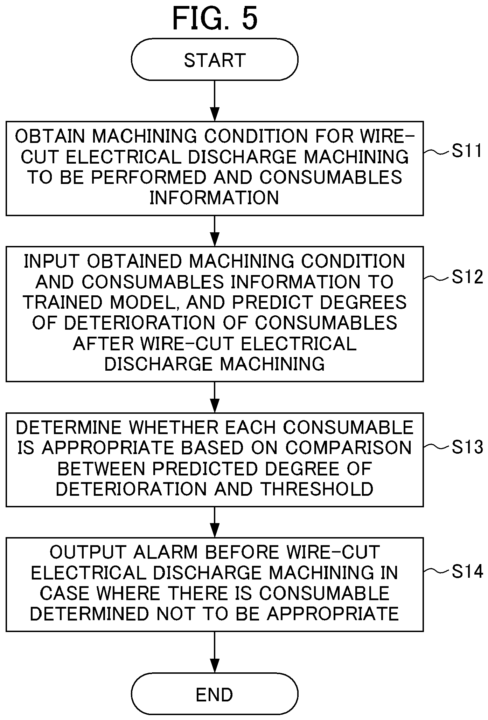

Fig. 5 is a flow chart for describing prediction processing by the prediction device 30 in an operation phase.

In step S11, before wire-cut electrical discharge machining by the wire-cut electrical discharge machine 20, the input unit 301 obtains a machining condition for wire-cut electrical discharge machining to be performed from the control information from the control device 10 and consumables information that includes a degree of deterioration of a wire electrode line, etc. from the consumables management tables 352, based on a consumable ID for the wire electrode line, etc. which is selected by a worker.

In step S12, the prediction unit 302 inputs the machining condition to be carried out and the consumables information which were obtained in step S11 to the trained model 351, and predicts the degrees of deterioration after the wire-cut electrical discharge machining for the selected consumables such as a wire electrode line and the like.

In step S13, the determination unit 303 determines whether each selected consumable, which is a wire electrode line for example, is appropriate, based on a comparison between the degree of deterioration predicted in step S12 for each consumable, which is a wire electrode line for example, and the preset threshold Th.

In step S14, in a case where there is a consumable, which is a wire electrode line for example, determined to be not appropriate in step S13, the notification unit 304, before the wire-cut electrical discharge machining, outputs an alarm indicating exchange of the consumable or adjustment of the machining condition to the output device (not shown) in the control device 10 and/or the wire-cut electrical discharge machine 20.

By the above, before wire-cut electrical discharge machining by the wire-cut electrical discharge machine 20, the prediction device 30 according to one embodiment inputs to the trained model 351 the machining condition to be carried out according to the wire-cut electrical discharge machining, the machining condition to be carried out being from control information from the control device 10, as well as consumables information including the degree of deterioration of the wire electrode line, etc. selected by the worker, and predicts the degree of deterioration after the wire-cut electrical discharge machining for the selected consumable, which is a wire electrode line for example. As a result, before wire-cut electrical discharge machining is performed, the prediction device 30 can predict whether the state of a consumable, which is a wire electrode line for example, will be good or bad in a case where the wire-cut electrical discharge machining is performed, while considering a machining condition. The prediction device 30 can also compare the predicted degree of deterioration for a consumable, which is a wire electrode line for example, with a preset threshold Th to thereby detect in advance for each consumable, which is a wire electrode line for example, whether the consumable will need to be exchanged during the wire-cut electrical discharge machining.

In other words, in a case where the degree of deterioration for a selected consumable, which is a wire electrode line for example, exceeds the threshold Th, the prediction device 30 can, before wire-cut electrical discharge machining, detect an optimal time to replace the consumable, which is a wire electrode line for example, or detect the necessity of adjusting a machining condition, and it is possible to reduce a load for a worker.

In addition, because the trained model 351 is generated using teaching data for various consumables, which are wire electrode lines for example, the prediction device 30 can predict whether the state for various consumables, which are wire electrode lines for example, will be good or bad.

This concludes the description regarding one embodiment, but the prediction device 30 and the machine learning device 40 are not limited to the embodiment described above, and include variations, improvements, etc. in a scope that enables the objective to be achieved.

### <First variation>

In the embodiment described above, the machine learning device 40 is exemplified as a device that differs to the control device 10, the wire-cut electrical discharge machine 20, and the prediction device 30, but some or all of the functionality of the machine learning device 40 may be provided in the control device 10, the wire-cut electrical discharge machine 20, or the prediction device 30.

### <Second variation>

In the embodiment described above, the prediction device 30 is exemplified as a device that differs to the control device 10 and the wire-cut electrical discharge machine 20, but some or all of the functionality of the prediction device 30 may be provided in the control device 10 or the wire-cut electrical discharge machine 20.

Alternatively, one, some, or all of the input unit 301, the prediction unit 302, the determination unit 303, the notification unit 304, and the storage unit 305 in the prediction device 30 may be provided in a server, for example. In addition, each function of the prediction device 30 may be realized using, for example, a cloud-based virtual server function.

Furthermore, the prediction device 30 may be a distributed processing system in which each function of the prediction device 30 is distributed among a plurality of servers, as appropriate.

### <Third variation>

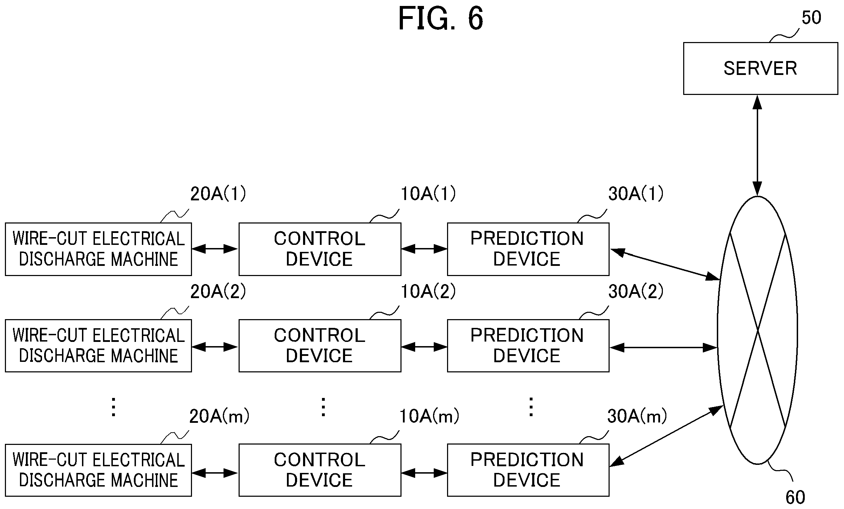

As another example, in the embodiment described above, the prediction device 30 uses the trained model 351 provided from the machine learning device 40 to predict the degree of deterioration of a consumable, which is a wire electrode line for example, after machining in accordance with a machining condition for wire-cut electrical discharge machining to be performed, the machining condition being obtained from one control device 10, but there is no limitation to this. For example, as illustrated in Fig. 6, a server 50 may store the trained model 351 generated by the machine learning device 40, and share the trained model 351 with m prediction devices 30A(1) to 30A(m) connected to a network 60 (m is an integer equal to or greater than 2). As a result, it is possible to employ the trained model 351 even if a new wire-cut electrical discharge machine, control device, and prediction device are disposed.

Note that the prediction devices 30A(1) to 30A(m) are respectively connected to control devices 10A(1) to 10A(m), and the control devices 10A(1) to 10A(m) are respectively connected to wire-cut electrical discharge machines 20A(1) to 20A(m) .

Each of the control devices 10A(1) to 10A(m) correspond to the control device 10 in Fig. 1. Each of the wire-cut electrical discharge machines 20A(1) to 20A(m) correspond to the wire-cut electrical discharge machine 20 in Fig. 1, may be the same model as each other, or may be mutually different models. Each of the prediction devices 30A(1) to 30A(m) corresponds to the prediction device 30 in Fig. 1.

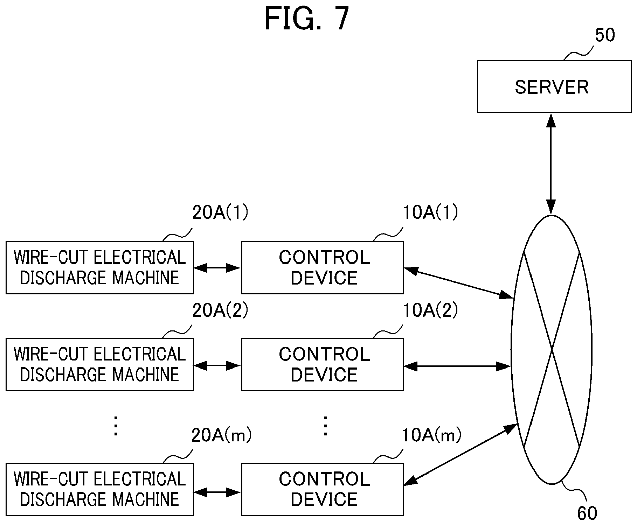

Alternatively, as illustrated in Fig. 7, a server 50 may, for example, operate as the prediction device 30, and, for each of control devices 10A(1) to 10A(m) connected to a network 60, predict the degree of deterioration for a consumable, which is a wire electrode line for example, under a machining condition for wire-cut electrical discharge machining to be performed. As a result, it is possible to employ the trained model 351 even if a new wire-cut electrical discharge machine and control device are disposed.

### <Fourth variation>

As another example, in the embodiment described above the consumables management tables 352(1) to 352(4) are respectively constructed for each consumable, such as wire electrode lines, ion exchange resins, power supply dies, and electrode line guide rollers, but there is no limitation to this. For example, one consumables management table 352 may manage all wire electrode lines, ion exchange resins, power supply dies, and electrode line guide rollers.

Note that each function included in the prediction device 30 and the machine learning device 40 according to the one embodiment may each be realized by hardware, software, or a combination of these. Being realized by software means being realized by a computer reading and executing a program.

Each component included in the prediction device 30 and the machine learning device 40 may be realized by hardware including an electronic circuit, etc., software, or a combination of hardware and software. In a case of being realized by software, a program that configures the software is installed onto a computer. Alternatively, these programs may be recorded onto removable media and distributed to a user, or may be distributed by being downloaded to a user's computer via a network. In addition, in the case of being configured by hardware, some or all of the functionality of each component included in the devices described above can be configured by an integrated circuit (IC) such as an application-specific integrated circuit (ASIC), a gate array, a field-programmable gate array (FPGA), or a complex programmable logic device (CPLD), for example.

A program can be stored using various types of non-transitory computer-readable mediums and supplied to a computer. A non-transitory computer-readable medium includes various types of tangible storage mediums. An example of a non-transitory computer-readable medium includes a magnetic recording medium (for example, a floppy disk, magnetic tape, or a hard disk drive), a magneto-optical recording medium (for example, a magneto-optical disk), a CD-ROM (read-only memory), CD-R, CD-R/W, and a semiconductor memory (for example, a mask ROM, a programmable ROM (PROM), an erasable PROM (EPROM), a flash ROM, or a RAM). In addition, a program may be supplied to a computer by various types of transitory computer-readable mediums. An example of a transitory computer-readable medium includes an electrical signal, an optical signal, or electromagnetic waves. A transitory computer-readable medium can supply a program to a computer via a wired communication channel such as an electrical wire or an optical fiber, or via a wireless communication channel.

Note that steps that express a program recorded to a recording medium of course include processing in chronological order following the order of these steps, but also include processing that is executed in parallel or individually, with no necessity for processing to be performed in chronological order.

To rephrase, the machine learning device, the prediction device, and the control device according to the present disclosure can have various embodiments which have configurations such as the following.
(1) The machine learning device 40 according to the present disclosure is provided with: the input data obtaining unit 401 that obtains input data that includes a machining condition for arbitrary wire-cut electrical discharge machining with respect to arbitrary workpiece by arbitrary wire-cut electrical discharge machine 20 and consumables information including a degree of deterioration before wire-cut electrical discharge machining in accordance with the machining condition for at least one selected from an electrode line, an ion exchange resin, a power supply die, and an electrode line guide roller; the label obtaining unit 402 that obtains label data indicating a degree of deterioration after wire-cut electrical discharge machining in accordance with the machining condition included in the input data for the at least one selected from the electrode line, the ion exchange resin, the power supply die, and the electrode line guide roller; and the learning unit 403 that uses the input data obtained by the input data obtaining unit 401 and the label data obtained by the label obtaining unit 402 to execute supervised learning and generate a trained model 351.

By virtue of this machine learning device 40, it is possible to generate a trained model that, before wire-cut electrical discharge machining is performed, can predict a degree of deterioration for a consumable in a case where the wire-cut electrical discharge machining is performed.

(2) In the machine learning device 40 according to (1), the machining condition may include at least one selected from an electrical discharge output, an amount of machining time, a type of machining fluid, a fluid pressure for the machining fluid, a feeding speed for the electrode line, and a workpiece plate thickness.

As a result, the machine learning device 40 can generate a trained model 351 that can predict with better accuracy the degree of deterioration for a consumable in a case where wire-cut electrical discharge machining is performed.

(3) The prediction device 30 according to the present disclosure is provided with: a trained model 351 generated by the machine learning device 40 according to (1) or (2); an input unit 301 configured to input, before wire-cut electrical discharge machining to be performed by a wire-cut electrical discharge machine 20, a machining condition for the wire-cut electrical discharge machining and the consumables information including a degree of deterioration before the wire-cut electrical discharge machining for at least one selected from an electrode line, an ion exchange resin, a power supply die, and an electrode line guide roller; and a prediction unit 302 configured to predict a degree of deterioration after wire-cut electrical discharge machining in accordance with the machining condition and the consumables information inputted by the input unit 301 using the trained model 351 for the at least one selected from the electrode line, the ion exchange resin, the power supply die, and the electrode line guide roller.

By virtue of this prediction device 30, it is possible to, before wire-cut electrical discharge machining is performed, predict a degree of deterioration for a consumable in a case where the wire-cut electrical discharge machining is performed.

(4) The prediction device 30 according to (3) may be further provided with the determination unit 303, which determines output of an alarm in a case where at least one degree of deterioration selected from degrees of deterioration that are for the electrode line, the ion exchange resin, the power supply die, and the electrode line guide roller and are predicted by the prediction unit 302 exceeds the preset threshold Th.

As a result, in a case where wire-cut electrical discharge machining is performed under the inputted machining condition, the prediction device 30 can notify a worker that at least exchange of a consumable during machining will occur.

(5) In the prediction device 30 according to (3), the alarm may make an instruction to exchange the electrode line, the ion exchange resin, the power supply die, or the electrode line guide roller for which the predicted degree of deterioration exceeded the threshold Th, or make an instruction to adjust the machining condition.

As a result, the prediction device 30 can easily detect an optimal time to exchange a consumable or the necessity of adjusting the machining condition.

(6) The prediction device 30 according to any one of (3) to (5), wherein the trained model may be provided in the server 50 connected so as to be accessible from the prediction device 30 via the network 60.

As a result, the prediction device 30 can employ the trained model 351 even if a new control device 10, wire-cut electrical discharge machine 20, and prediction device 30 are disposed.

(7) The prediction device 30 according to any one of (3) to (6) may be provided with: the machine learning device 40 according to (1) or (2).

As a result, the prediction device 30 can achieve an effect similar to that for any one of (1) to (6) described above.

(8) The control device 10 according to the present disclosure may be provided with the prediction device 30 according to any one of (3) to (7).

By virtue of this control device 10, it is possible to achieve effects similar to any one of (1) to (7) described above.

### EXPLANATION OF REFERENCE NUMERALS

10 Control device
20 Wire-cut electrical discharge machine
30 Prediction device
40 Machine learning device
301 Input unit
302 Prediction unit
303 Determination unit
304 Notification unit
305 Storage unit
351 Trained model
352(1) to 352(4) Consumables management table
401 Input data obtaining unit
402 Label obtaining unit
403 Learning unit
404 Storage unit

## Claims

1. A machine learning device, comprising:
an input data obtaining unit configured to obtain input data that includes a machining condition for arbitrary wire-cut electrical discharge machining with respect to arbitrary workpiece by arbitrary wire-cut electrical discharge machine and consumables information including a degree of deterioration before wire-cut electrical discharge machining in accordance with the machining condition for at least one selected from an electrode line, an ion exchange resin, a power supply die, and an electrode line guide roller;
a label obtaining unit configured to obtain label data indicating a degree of deterioration after wire-cut electrical discharge machining in accordance with the machining condition included in the input data for the at least one selected from the electrode line, the ion exchange resin, the power supply die, and the electrode line guide roller; and
a learning unit configured to use the input data obtained by the input data obtaining unit and the label data obtained by the label obtaining unit to execute supervised learning and generate a trained model.

2. The machine learning device according to claim 1, wherein the machining condition includes at least one selected from an electrical discharge output, an amount of machining time, a type of machining fluid, a fluid pressure for the machining fluid, a feeding speed for the electrode line, and a workpiece plate thickness.

3. A prediction device, comprising:
a trained model generated by the machine learning device according to claim 1 or claim 2;
an input unit configured to input, before wire-cut electrical discharge machining to be performed by a wire-cut electrical discharge machine, a machining condition for the wire-cut electrical discharge machining and the consumables information including a degree of deterioration before the wire-cut electrical discharge machining for at least one selected from an electrode line, an ion exchange resin, a power supply die, and an electrode line guide roller; and
a prediction unit configured to predict a degree of deterioration after wire-cut electrical discharge machining in accordance with the machining condition and the consumables information inputted by the input unit using the trained model for the at least one selected from the electrode line, the ion exchange resin, the power supply die, and the electrode line guide roller.

4. The prediction device according to claim 3, further comprising: a determination unit configured to determine output of an alarm in a case where at least one degree of deterioration selected from degrees of deterioration that are for the electrode line, the ion exchange resin, the power supply die, and the electrode line guide roller and are predicted by the prediction unit exceeds a preset threshold.

5. The prediction device according to claim 4, wherein the alarm makes an instruction to exchange the electrode line, the ion exchange resin, the power supply die, or the electrode line guide roller for which the predicted degree of deterioration exceeded the threshold, or makes an instruction to adjust the machining condition.

6. The prediction device according to any one of claims 3 to 5, wherein
the trained model is provided in a server connected so as to be accessible from the prediction device via a network.

7. The prediction device according to any one of claims 3 to 6, comprising: the machine learning device according to claim 1 or claim 2.

8. A control device comprising: the prediction device according to any one of claims 3 to 7.
